# EUROPÄISCHE PATENTANMELDUNG

(11) **EP 1 209 032 A2**
(43) Veröffentlichungstag der Anmeldung: **29.05.2002**
(21) Anmeldenummer: 01123112.3
(22) Anmeldetag: 27.09.2001
(51) Int. Cl.: B60R 1/07

(54) **Verstellvorrichtung für Kraftfahrzeug-Aussenspiegel**

(30) Priorität: 25.11.2000 DE 10058724
(71) Anmelder: Bühler Motor GmbH, 90459 Nürnberg (DE)
(72) Erfinder: Seichter, Werner, 91166 Georgensgmünd (DE); Guttenberger, Richard, 91171 Greding (DE)

(57) **Zusammenfassung**

Verstellvorrichtung für den Außenspiegel eines Kraftfahrzeugs mit einem Antriebsgehäuse, an dem über ein zentrales Kugel- Kalottenlager ein Spiegelglasträger gelagert ist, der bevorzugt mit sich kreuzenden metallischen Zahnbändern, Ketten oder dergleichen versehen ist, die das schalenartige Antriebsgehäuse umgreifend in Eingriff mit den Abtriebszahnrädern zweier im Antriebsgehäuse angeordneter Antriebsmotoren stehen, und mit einer vorzugsweise als Durchführungsstecker ausgebildeten Leitungsdurchführung des Antriebsgehäuses zur Verbindung der elektrischen Verbraucher mit äußeren Strom- und Steuerleitungen, wobei die Leitungsdurchführung an einem in eine Aussparung des Antriebsgehäuses, diese vorzugsweise dicht verschließend, einsetzbaren Adapterteil (7) angeformt ist.

## Beschreibung

Die Erfindung bezieht sich auf eine Verstellvorrichtung für den Außenspiegel eines Kraftfahrzeugs mit einem Antriebsgehäuse, an dem über ein zentrales Kugel- Kalottenlager ein Spiegelglasträger gelagert ist, der bevorzugt mit sich kreuzenden metallischen Zahnbändern, Ketten oder dergleichen versehen ist, die das schalenartige Antriebsgehäuse umgreifend in Eingriff mit den Abtriebszahnrädern zweier im Antriebsgehäuse angeordneter Antriebsmotoren stehen, und mit einer vorzugsweise als Durchführungsstecker ausgebildeten Leitungsdurchführung des Antriebsgehäuses zur Verbindung der elektrischen Verbraucher mit äußeren Strom- und Steuerleitungen.

Ein wesentliches Problem bei derartigen Verstellvorrichtungen ist die Ausbildung der Leitungsdurchführung speziell in Form eines Durchführungssteckers, da die Autoindustrie eine Vielzahl unterschiedlich ausgebildeter Verstellvorrichtungen braucht, die sich beispielsweise dadurch unterscheiden, dass zusätzlich zum Antrieb für die Verstellmotoren auch eine Spiegelheizung oder eine Spiegelabdunkelung oder weitere Zusatzfunktionen mit vorgesehen sind, wie beispielsweise eine Abstandseinblendung eines Abstandsmessgerätes in den Spiegel und so weiter. Dies bedeutet, dass jeweils für all diese Zwecke unterschiedliche Antriebsgehäuse vorrätig gehalten werden müssen, die mit Durchführungssteckern unterschiedlicher Polanzahl und unterschiedlicher Ausbildung, beispielsweise gedichtet oder nicht gedichtet, versehen sind.

Der Erfindung liegt daher die Aufgabe zugrunde, eine Verstellvorrichtung der eingangs genannten Art so auszugestalten, dass mit sehr einfachen Mitteln und ohne großen Bauaufwand eine Anpassung an unterschiedliche Anwendungszwecke und insbesondere unterschiedliche Zahl und Art der Leitungsdurchführungen möglich ist.

Zur Lösung dieser Aufgabe ist erfindungsgemäß vorgesehen, dass die Leitungsdurchführung an einem in eine Aussparung des Antriebsgehäuses, dieses vorzugsweise dicht verschließend, einsetzbaren Adapterteil angeformt ist, wobei die Aussparung bevorzugt so angeordnet und ausgebildet ist, dass durch sie von oben her alle inneren Anschlusskontakte zugänglich sind.

Die erfindungsgemäße Ausbildung ermöglicht es, die unterschiedlichen Anforderungen an die zahlreichen auf dem Markt benötigten Verstellvorrichtungen oder Anschlussvarianten dadurch zu erfüllen, dass man nicht jedes Mal ein ganzes Antriebsgehäuse mit einem angeformten Spezialstecker vorsehen und fertigen muss, sondern dass man eine Grundausführung mit einer Aussparung im Antriebsgehäuse hat, in die je nach Bedarf entsprechende Adapterteile eingesetzt werden, die mit den entsprechenden vom Kunden gewünschten Steckerausbildungen versehen sind.

In einer bevorzugten Weiterbildung der Erfindung können dabei am Adapterteil Gegenkontakte befestigt sein, die beim Aufsetzten auf das Antriebsgehäuse automatisch die gewünschte Steckkontaktierung mit den inneren Anschlusskontakten bewirken. Dies ergibt eine besonders einfache Montage, die sogar noch erheblich einfacher ist, als bisher, da derzeit ja noch die Steckerkontakte des Durchführungssteckers mit den inneren Anschlusskontakten einzeln durch bewegliche Leitungen oder durch Leiterblechzungen verbunden werden müssen. All diese Montageschritte lassen sich vermeiden, indem vorgefertigte Adapterteile mit den entsprechenden Gegenkontakten vorgesehen werden, die beim Einsetzten in die Aussparung des Antriebsgehäuses die gesamte Steckkontaktierung bewerkstelligen.

Die Verbindung der jeweiligen Adapterteile mit dem Antriebsgehäuse kann dabei als lösbare Verbindung oder auch als starre unlösbare Verbindung, wie beispielsweise durch Verschweißen oder Verkleben ausgebildet sein. In der Praxis genügt eine starre Verbindung, da es ja im vorliegenden Fall nicht primär darum geht, nachträglich wieder einen Zugang zum Inneren des Antriebsgehäuses zu schaffen, sondern darum, das Vorsehen einer Vielzahl unterschiedlich aufgebauter und unterschiedliche Durchführungsstecker aufweisende Antriebsgehäuse zu vermeiden. Die lösbare Verbindung hat aber zusätzlich den Vorteil, dass bei etwaigen Reparaturen ein sehr einfacher Zugang möglich ist und man nicht - wie man dies bisher meist macht - die ganze Verstellvorrichtung ausbaut, wegwirft und durch eine neue ersetzen muss.

Das Adapterteil besteht im einfachsten Fall aus einer Platte, die in Form und Profilierung der Wandausbildung der Aussparung des Antriebsgehäuses entspricht, an der ein Durchführungsstecker angeformt ist, der mit fest verlegten Verbindungsleitungen mit den Gegenkontakten an der Adapterplatte verbunden ist.

Weitere Vorteile, Merkmale und Einzelheiten der Erfindung ergeben sich aus der nachfolgenden Beschreibung eines Ausführungsbeispiels sowie anhand der Zeichnung. Dabei zeigen:
- Fig. 1: Eine perspektivische Ansicht eines erfindungsgemäßen Antriebsgehäuses von hinten,
- Fig. 2: eine Explosionsdarstellung des Antriebsgehäuses nach Fig. 1 mit dem über dem Gehäuse mit der Aussparung angeordneten Adapterteil,
- Fig. 3 und 4: unterschiedliche perspektivische Ansichten eines weiteren Adapterteils mit zusätzlichen Steckern für die Kontaktierung der Motore, eines Potentiometers oder auch Spiegelheizung oder Spiegelabdunkelung,
- Fig. 5 und 6: einen vom Steckeraufbau der Anordnung aus den Figuren 1 und 2 entsprechende perspektivische Darstellung eines Adapterteiles mit anderer Ausbildung des Durchführungssteckers und
- Fig. 7: eine weitere perspektivische Ansicht eines vierten Ausführungsbeispiels eines erfindungsgemäßen Adapterteils mit einem in wasserabgedichteter Form ausgebildeten Durchführungssteckers.

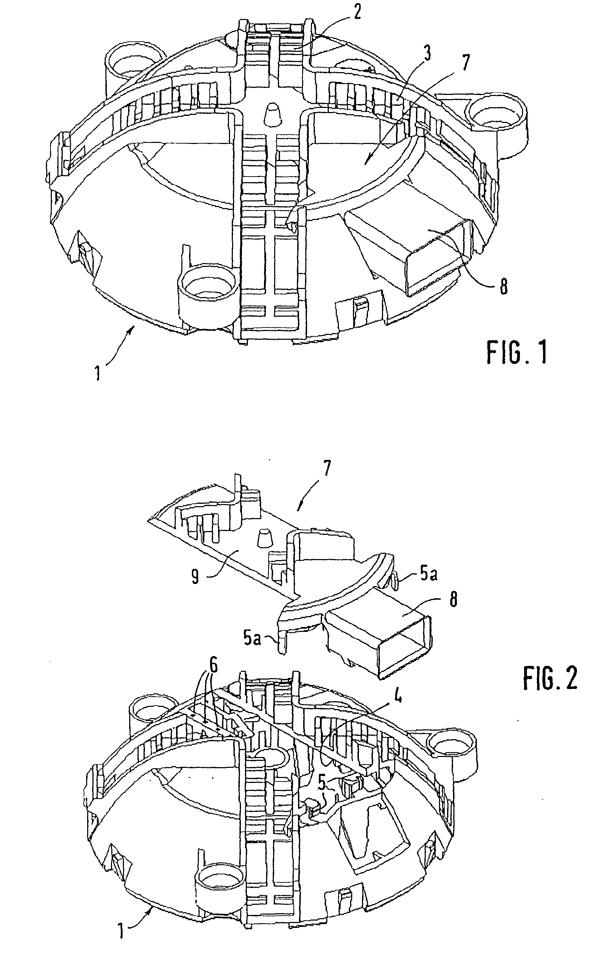

Die Figuren 1 und 2 zeigen ein Antriebsgehäuse 1 für eine Verstellvorrichtung für den Außenspiegel eines Kraftfahrzeugs, wobei über eine nicht erkennbare Kugel-Kalottenlagerung ein nicht gezeigter Spiegelglasträger gelenkig mit dem Antriebsgehäuse 1 verbunden ist. An einer umlaufenden Ringwand des Spiegelglasträgers sind sich kreuzende Zahnbänder befestigt, die das Antriebsgehäuse in den beiden gezeigten Führungen 2 und 3 umgreifen und aufgrund ihrer elastischen Ausbildung, die gegebenenfalls durch zusätzliche Wellungen noch verstärkt werden kann, das Antriebsgehäuse und den Spiegelglasträger zusammenhalten. In Zahnabschnitte der Zahnbänder, greifen Abtriebszahnräder der im Innern des Antriebsgehäuses angeordneten Verstellmotoren ein, um den Spiegelglasträger um zwei einander senkrecht kreuzende Achsen zu verschwenken.

Um die elektrische Verbindung der äußeren Anschlussleitungen mit den inneren Anschlüssen im Antriebsgehäuse zu erzielen, ist erfindungsgemäß bei dem gezeigten Antriebsgehäuse eine Aussparung 4 im Antriebsgehäuse vorgesehen, die so ausgebildet und angeordnet ist, dass durch sie von oben her gesehen alle inneren Anschlusskontakte 5 für die Antriebsmotoren, oder 6 für zusätzliche Funktionen wie Potis, Spiegelheizungen oder dergleichen zugänglich sind. Ein Adapterteil 7 mit einem angeformten Durchführungsstecker 8 für die äußeren Anschlussleitungen ist mit einem plattenförmigen Teil 9 versehen, das exakt der Aussparung 4 des Antriebsgehäuses entspricht, sodass beim Aufsetzen des Adapterteils 7 die Aussparung 4 vollständig und dicht wieder verschlossen wird. An Adapterteil 7 sind Gegenstecker 5a und gegebenen Falls 6a befestigt, wobei die Ausbildung so getroffen ist, dass beim Aufsetzen des Adapterteils 7 automatisch die Gegenstecker 5a, 6a kontaktierend in die inneren Anschlusskontakte 5 und 6 eingreifen und so die elektrische Verbindung zwischen dem Durchführungsstecker und dem inneren Verbraucher herstellen.

Um die Aussparung 4 so zu platzieren, dass die vorstehend angesprochene automatische Kontaktierung beim Aufsetzen des Adapterteils 7 erfolgen kann, werden natürlich auch Teile der Führungen 2 und 3 für die Zahnbänder mit ausgeschnitten. Die Platte 9 des Adapterteils 7 entspricht identisch dem entsprechenden Wandausschnitt des Antriebsgehäuses in Form und äußerer Konturierung. Die Platte stellt also quasi nichts anderes dar, als das durch Ausschneiden eines entsprechenden Wandteils gebildete Element.

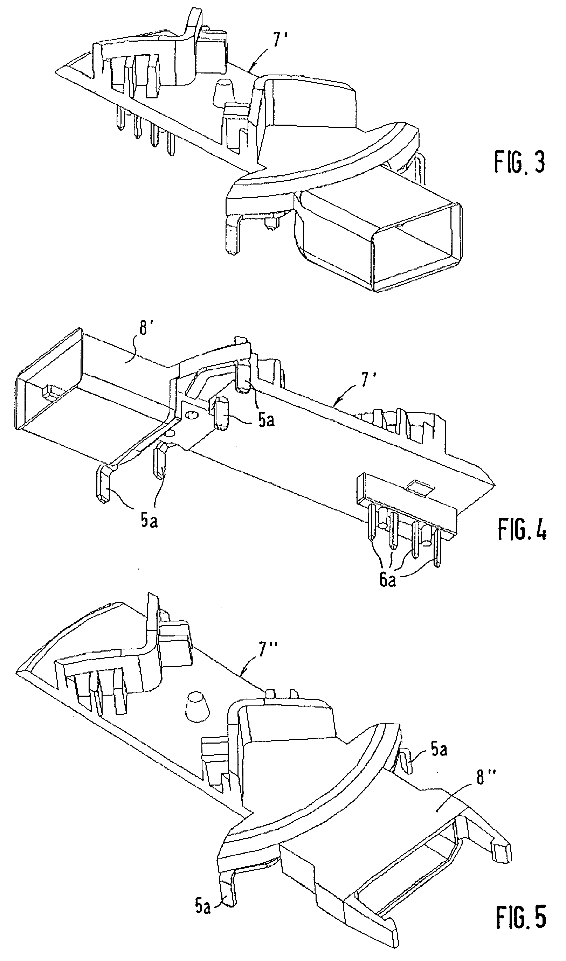

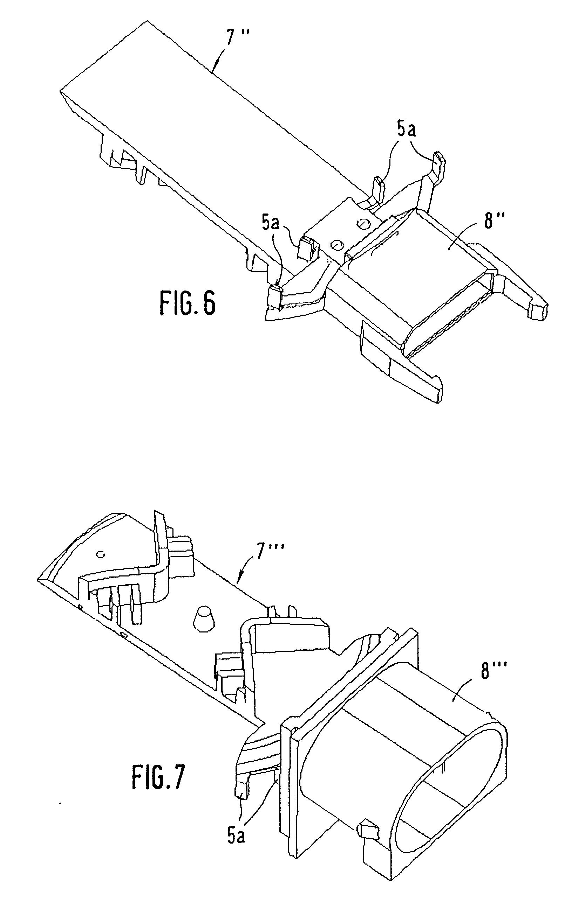

Die in den Figuren 3 bis 7 gezeigten unterschiedlichen Adapterteile 7', 7" und 7''' unterscheiden sich von dem nach Figur 1 lediglich durch unterschiedliche Durchführungsstecker 8', 8" und 8''' sowie unterschiedliche Anzahl von Gegensteckern für den Anschluss zusätzlicher Verbraucher, wie dies weiter oben bereits erläutert worden ist. In ihrer Formgebung sind sie alle so ausgebildet, dass sie in ein und dieselbe Aussparung 4 des Antriebsgehäuses 1, diese Aussparung vorzugsweise dicht verschließend, einsetzbar sind, wobei gleichzeitig mit dem Einsetzen die Steckverbindung zwischen den Kontakten 5, 6 und den Gegenkontakten 5a, 6a des Adapterteils erfolgt.

## Patentansprüche

1. Verstellvorrichtung für den Außenspiegel eines Kraftfahrzeugs mit einem Antriebsgehäuse, an dem über ein zentrales Kugel- Kalottenlager ein Spiegelglasträger gelagert ist, der bevorzugt mit sich kreuzenden metallischen Zahnbändern, Ketten oder dergleichen versehen ist, die das schalenartige Antriebsgehäuse umgreifend in Eingriff mit den Abtriebszahnrädern zweier im Antriebsgehäuse angeordneter Antriebsmotoren stehen, und mit einer vorzugsweise als Durchführungsstecker ausgebildeten Leitungsdurchführung des Antriebsgehäuses zur Verbindung der elektrischen Verbraucher mit äußeren Strom- und Steuerleitungen, **dadurch gekennzeichnet, dass** die Leitungsdurchführung an einem in eine Aussparung (4) des Antriebsgehäuses (1), diese vorzugsweise dicht verschließend, einsetzbaren Adapterteil (7, 7', 7", 7''') angeformt ist.

2. Verstellvorrichtung nach Anspruch 1, **dadurch gekennzeichnet, dass** die Aussparung (4) so angeordnet ist, dass durch sie von oben her alle inneren Anschlusskontakte (5, 6) zugänglich sind.

3. Verstellvorrichtung nach Anspruch 2, **dadurch gekennzeichnet, dass** am Adapterteil (7, 7', 7", 7''') Gegenkontakte (5a, 6a) befestigt sind, die beim Aufsetzten auf das Antriebsgehäuse (1) automatisch die gewünschte Steckkontaktierung mit den Anschlusskontakten (5, 6) bewirken.

4. Verstellvorrichtung nach Anspruch 1 bis 3, **dadurch gekennzeichnet, dass** das Adapterteil (7, 7', 7", 7''') eine Platte (9) umfasst, die in Form und Profilierung der Aussparung (4) des Antriebsgehäuses (1) entspricht.

5. Verstellvorrichtung nach einem der Ansprüche 1 bis 4, **dadurch gekennzeichnet, dass** das Adapterteil (7, 7', 7", 7''') lösbar mit dem Antriebsgehäuse (1) verbunden, insbesondere verrastet ist.

6. Verstellvorrichtung nach einem der Ansprüche 1 bis 4, **dadurch gekennzeichnet, dass** das Adapterteil (7, 7', 7", 7''') unlösbar mit dem Antriebsgehäuse (1) verbunden ist.
